# EUROPÄISCHE PATENTSCHRIFT

(11) **EP 0 869 889 B1**
(45) Veröffentlichungstag und Bekanntmachung des Hinweises auf die Patenterteilung: **28.06.2000**
(21) Anmeldenummer: 97901562.5
(22) Anmeldetag: 20.01.1997
(51) Int. Cl.: B60T 7/10, B62D 65/00

(54) **HANDBREMSEINRICHTUNG UND MONTAGEVERFAHREN**
HAND-BRAKE DEVICE AND INSTALLATION METHOD
SYSTEME DE FREIN A MAIN ET PROCEDE DE MONTAGE CORRESPONDANT

(30) Priorität: 20.01.1996 DE 29600996 U; 28.02.1996 DE 29603591 U; 02.10.1996 DE 19640720
(43) Veröffentlichungstag der Anmeldung: 14.10.1998
(73) Patentinhaber: AL-KO KOBER AG, D-89359 Kötz (DE)
(72) Erfinder: RAMPP, Armin, D-86513 Ursberg (DE); WÖHRLE, Rudolf, D-89335 Ichenhausen (DE); KOBER, Kurt, D-89359 Kötz (DE)
(74) Vertreter: Ernicke, Hans-Dieter, Dipl.-Ing.
(86) Internationale Anmeldenummer: EP9700247
(87) Internationale Veröffentlichungsnummer: WO9726163

(56) Entgegenhaltungen:
- EP-A- 0 399 882
- DE-A- 4 023 047
- DE-U- 9 405 849
- FR-A- 2 672 023

## Beschreibung

Die Erfindung betrifft eine Handbremseinrichtung und ein Montageverfahren in einem Fahrzeug mit den Merkmalen im Oberbegriff des Hauptanspruchs.

Eine solche Handbremseinrichtung ist aus dem DE-G 94 05 849 bekannt. Die EP-A 0 040 574 zeigt eine ähnliche Vorrichtung. Die Handbremseinrichtung ist für Fahrzeuge, insbesondere für Pkws konzipiert und besteht aus einem Handbremshebel sowie mindestens einem zu den Radbremsen führenden Seilzug. Zwischen dem Handbremshebel und dem Seilzug ist eine automatische Seilzugverstellung angeordnet, die im Betrieb das Spiel aus dem Seilzug beseitigt.

In der Praxis bilden der Handbremshebel und die Seilzugverstellung zusammen mit einem gegebenenfalls vorhandenen Montagegestell eine vorbereitete Montageeinheit, die bei der Fahrzeugherstellung getrennt von den Seilzügen montiert und erst anschließend mit diesen verbunden wird. Bei der Fahrzeugherstellung werden die aus vorbereiteten Baueinheiten bestehende Bodengruppe und Karosserie mit einer im wesentlichen vertikalen Fügebewegung im sogenannten Decking miteinander verbunden. Bei der Handbremsmontage wird zunächst die vorerwähnte Montageeinheit vor dem Decking in die Karosserie eingefahren und mit dieser verschraubt. Die Montage erfolgt üblicherweise von unten her, wobei der in Ruhelage befindliche und im wesentlichen waagerecht liegende Handbremshebel von unten her durch eine Öffnung in der Karosserie mit einer Kipp- und Schwenkbewegung eingefädelt werden muß. Die losen Seilzüge werden separat montiert und zunächst an den Radbremsen eingehängt. Sie sind dadurch an der Bodengruppe des Fahrzeugs angeordnet. Anschließend findet das Decking statt. Danach werden die Seilzüge durch eine Öffnung am Karosserieboden eingesteckt und mit der Seilzugverstellung verbunden. Diese Montagetechnik benötigt eine Vielzahl kostenintensiver Arbeitsschritte. Sie läßt sich auch nicht automatisieren.

Aus der DE-A 40 23 047 ist ein Montageverfahren für eine Handbremseinrichtung bekannt, die keine automatische Seilzugverstellung aufweist. Hier ist der Seilzug direkt am Handbremshebel eingehängt. Der Handbremshebel kann senkrecht gestellt werden und zusammen mit einem Montagegestell und dem Seilzug von unten her an der Karosserie montiert werden. Die Senkrechtstellung des Hebels wird ermöglicht durch eine zweiteilige Seilzughülle, die sich für die Montage in einer Zwischenstellung am Montagegestell und erst nach erfolgter Montage straffgezogen wird und dann in der Endstellung verbleibt.

Es ist Aufgabe der vorliegenden Erfindung, eine besser montierbare Handbremseinrichtung und ein Montageverfahren aufzuzeigen.

Die Erfindung löst diese Aufgabe mit den Merkmalen im Verfahrens- und Vorrichtungshauptanspruch.

Mit der Erfindung wird vorgeschlagen, die Handbremseinrichtung für die Fahrzeugmontage aus ein oder mehreren vorbereiteten Montageeinheiten zu bilden und die Seilzugverstellung als montagegünstige Schnittstelle auszugestalten. Wenn die Handbremseinrichtung aus einer einzigen Montageeinheit besteht, kann über eine Trennung, Überbrückung oder Entlastung der Seilzugverstellung der Handbremshebel in eine montagegünstige Position gebracht werden. Die Handbremseinrichtung läßt sich dadurch vor dem Decking komplett und mit nur sehr geringem Montageaufwand montieren. Dabei sind alle Teile frei und gut zugänglich. Nach dem Decking braucht der Handbremshebel nur noch umgelegt zu werden, wobei die Seilzugverstellung wieder in Funktion gebracht wird.

In einer Variante kann die Handbremseinrichtung aus mehreren vorbereiteten Montageteileinheiten bestehen, die an der Schnittstelle Seilzugverstellung getrennt werden. Sie lassen sich dadurch einzeln und auf einfache Weise montieren, wobei die Verbindung der Montageteileinheiten nach dem Decking über die Seilzugverstellung und deren Funktionsaufnahme erfolgt. Hierbei wird ebenfalls der Montageaufwand minimiert.

Die erfindungsgemäße Handbremseinrichtung ist in den verschiedenen Ausführungsformen als Systemgruppe modultauglich. Sie bietet ein Optimum an Montagesicherheit und Wirtschaftlichkeit. Die Zahl der Arbeitsvorgänge ist wesentlich reduziert und auch die Fehleranfälligkeit deutlich verringert. Die Handbremsmontage läßt sich optimal an die Deckingvorgänge bei der Fahrzeugherstellung anpassen.

In den Unteransprüchen sind vorteilhafte Gestaltungen der Erfindung angegeben.

Um den Handbremshebel in der aufrechten Stellung zu halten, kann eine lösbare Hebelfixierung vorhanden sein, die den Handbremshebel außerdem gegen eine eventuelle vorhandene rückstellende Federkraft sichert. Im einfachsten Fall kann die Hebelfixierung ein Steckbolzen sein, der nach dem Decking einfach abgezogen wird.

Die Seilzugverstellung kann unterschiedlich ausgebildet sein. In der bevorzugten Ausführungsform besteht sie aus einer Zugstange mit ein oder mehreren Klemmbacken und einem Klemmgehäuse, welches drehbar mit dem Handbremshebel verbunden ist. Diese Ausführung ist für eine Trennung, Überbrückung und Entlastung der Seilzugverstellung besonders vorteilhaft. Als Schnittstelle eignet sich besonders das vorzugsweise als Schrägverzahnung ausgebildete Rastgesperre zwischen Klemmbacke und Zugstange. Um ein Senkrechtstellen des Handbremshebels zu ermöglichen, kann die Zugstange außer Eingriff mit Klemmbacke und Klemmgehäuse gebracht werden. Für das spätere Einfädeln und In-Funktion-Bringen ist ein Spannseil oder eine Führungsnase günstig, die die Zugstange in das Klemmgehäuse leiten.

Die beschriebene Seilzugverstellung hat ferner den Vorteil eines sehr großen Verstellweges, der es erlaubt, den Handbremshebel in die vertikale Position zu bringen, ohne dabei die bremsseitigen Seilzugenden anzuziehen. Zur Verbesserung der Montagebedingungen ist es vorteilhaft, für die Seilzugverstellung ebenfalls eine lösbare Fixierung vorzusehen. Die Fixierung kann demontiert, bei der Montage an einer Sollbruchstelle zerstört oder auf andere Weise gelöst werden.

Die Überbrückungseinrichtung zum Entlasten bzw. Offenhalten der Seilzugverstellung kann in beliebiger Weise ausgeführt sein. Bei Vorhandensein einer Zugstange ist es günstig, diese auf der Zugstange anzuordnen und durch Klemmung mit dem Handbremshebel in der Montageposition zu halten.

Das in dem oder den Seilzügen vorhandene Spiel wird mittels einer Feder aufgenommen. Die Feder kann als auf die Zugstange aufgezogene Druckfeder ausgebildet sein. Diese Ausbildung hat den Vorteil, daß sie die Zugstange in einer definierten und montagegünstigen Lage hält. Sie ist besonders dann von Vorteil, wenn die Zugstange mit der Feder und dem Seilzugwiderlager die eine Montageteileinheit bildet und der Handbremshebel mit Klemmbacke und Klemmgehäuse erst später montiert und mit der Zugstange verbunden wird.

Die Feder kann auch als Drehfeder ausgebildet und über ein Spannseil mit der Zugstange verbunden sein. Dies vergrößert zum einen den zur Verfügung stehenden Verstellweg der Seilzugverstellung und verbessert zum anderen die Kinematik, Übersetzung und Kraftverhältnisse beim Nachspannen des oder der Seilzüge. Als weiteren Vorteil bieten die Drehfeder die Möglichkeit, den entlasteten Handbremshebel in eine Ruheposition zu drücken und dort schwingungsfrei festzuhalten.

Die Erfindung ist in den Zeichnungen beispielsweise und schematisch dargestellt. Im einzelnen zeigen:
- Figur 1:: eine Handbremseinrichtung mit Handbremshebel in aufrechter Position und Montagestellung,
- Figur 2:: die Handbremseinrichtung von Figur 1 in Betriebsstellung mit entlastetem Handbremshebel,
- Figur 3:: eine teilweise geschnittene Draufsicht auf die Seilzugverstellung,
- Figur 4, 5:: eine Variante der Handbremseinrichtung von Fig. 1 in Seitenansicht und Draufsicht,
- Figur 6:: eine weitere Abwandlung der Handbremseinrichtung von Fig. 1 und 4 in Seitenansicht und
- Figur 7:: eine vergrößerte Draufsicht auf die Zugstange und das Seilzugwiderlager.

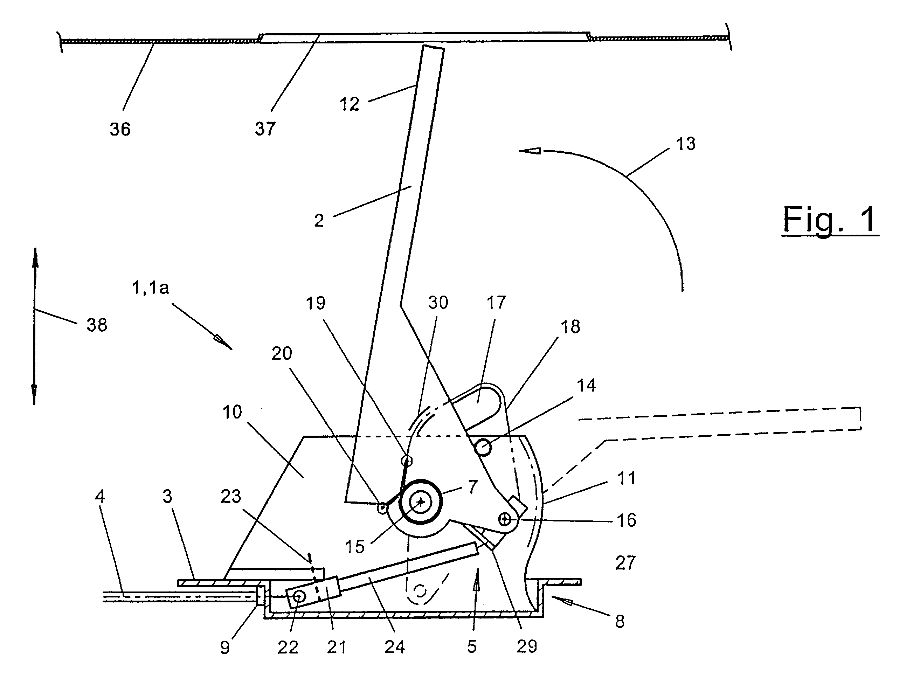

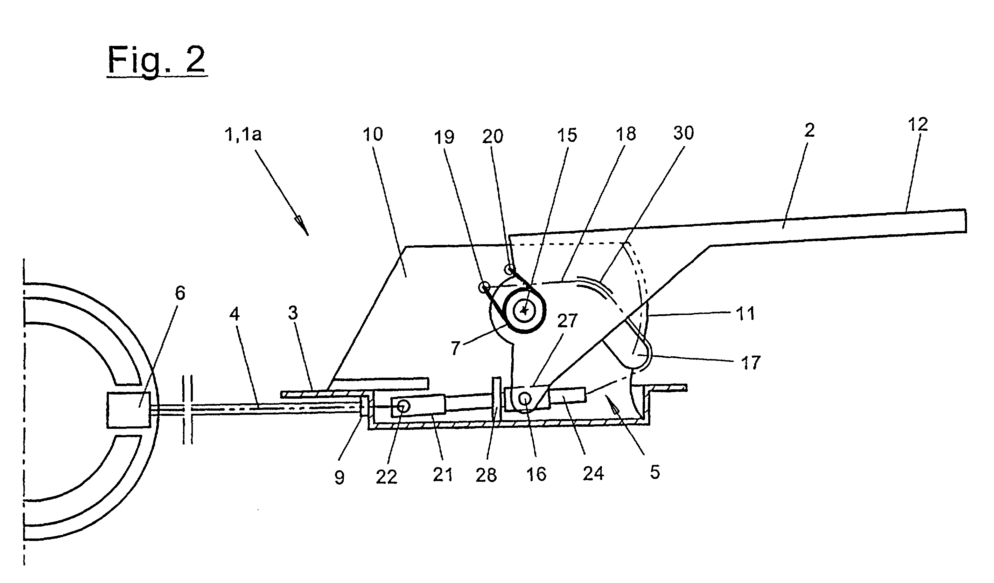

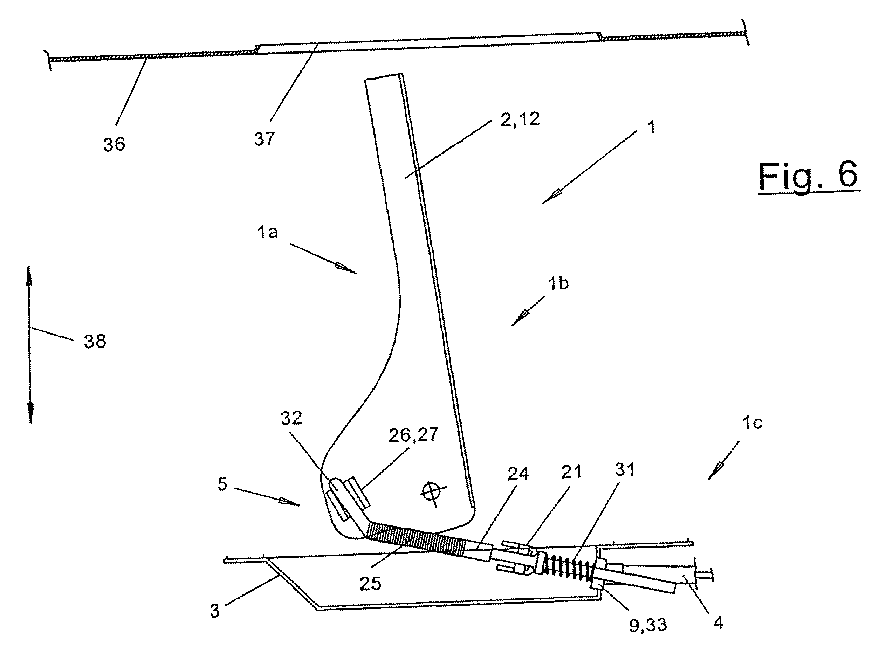

Figur 1, 2, 4, 5 und 6 zeigen eine aus ein oder mehreren Montageeinheiten (1a,1b,1c) bestehende Handbremseinrichtung (1) für Fahrzeuge, insbesondere Pkws. Figur 1 und 6 verdeutlichen die Montagestellung und Figur 2, 4 und 5 die Betriebsstellung der Handbremseinrichtung (1).

Die Handbremseinrichtung (1) besteht aus einem Handbremshebel (2), der um eine querliegende Achse (15) drehbar an einer Hebelkonsole (10) gelagert ist. Die Hebelkonsole (10) ist ihrerseits an geeigneter Stelle im Fahrzeug befestigbar, z.B. auf einem wannenförmigen Montagegestell (3). Die Handbremseinrichtung (1) beinhaltet ferner noch ein oder mehrere Seilzüge (4) nebst ein oder mehreren zugehörigen Seilzugverstellungen (5). Die Seilzugverstellung (5) ist zwischen Handbremshebel (2) und Seilzug (4) angeordnet. Sie nimmt im Betrieb der Handbremseinrichtung (1) das Spiel aus den Seilzügen (4) und kompensiert Verschleiß, Seillängungen etc..

Die Seilzugverstellung (5) kann unterschiedlich ausgebildet sein. Sie besitzt im gezeigten Ausführungsbeispiel z.B. ein federbelastetes (7,31) Zugelement (24), ein Klemmelement (26) und ein Klemmgehäuse (27), wobei das Zugelement (24) und das Klemmelement (26) durch ein Rastgesperre (25) lösbar miteinander verbunden sind. Das Zugelement (24) ist vorzugsweise mit dem Seilzug (4) verbunden, während das Klemmelement (26) und das Klemmgehäuse (27) vorzugsweise dem Handbremshebel (2) zugeordnet sind. In abgeschwenkter Ruhestellung des Handbremshebels (2) ist das Rastgesperre (25) geöffnet, so daß die Feder (7,31) das Zugelement (24) anziehen und damit den Seilzug straffen kann. Bei Betätigung des Handbremshebels (2) schließt das Rastgesperre (25), wodurch die Hebelbewegungen und -kräfte auf den Seilzug übertragen werden. Die Details sind nachfolgend näher beschrieben.

Im Ausführungsbeispiel von Figur 1 bis 3 bilden die vorgenannten Komponenten (2,3,4,5) miteinander eine vorgefertigte Montageeinheit (la), die von einem Systemlieferanten einbaufertig als Kompletteil an den Kunden, z.B. einen Automobilhersteller geliefert wird.

In der Liefer- bzw. Montagestellung der Montageeinheit (la) steht der Handbremshebel (2) aufrecht und ist dabei im wesentlichen senkrecht ausgerichtet. In dieser Stellung ragt der Griff (12) vertikal oder etwas schräg nach oben. In dieser Position kann der Handbremshebel (2) durch eine lösbare Hebelfixierung (14) arretiert werden. Hierbei kann es sich beispielsweise um einen Steckbolzen handeln, der durch die schematisch dargestellt Hebelkonsole (10) quer gesteckt wird und ein Rückdrehen des Handbremshebels (2) verhindert. In der Montagestellung von Figur 1 ist der Handbremshebel (2) außerdem vorzugsweise vom Zahnbogen (11) an der Hebelkonsole (10) entkoppelt. In der Betriebsstellung greift eine an sich bekannte Klinkensperre in den besagten Zahnbogen (11).

In der gezeigten bevorzugten Ausführungsform wird der Handbremshebel (2) von einer Feder (7) entgegen der Anzugs- oder Drehrichtung (13) belastet. Die nachfolgend näher beschriebene Feder (7) versucht, den Handbremshebel (2) stets in die in Figur 1 gestrichelt und abgebrochen angedeutete Ruhestellung zu drehen, in der der Griff (12) im wesentlichen horizontal liegt. Die Hebelfixierung (14) blockiert in der Montagestellung die Rückstellkraft der Feder (7).

Die Hebelfixierung (14) kann alternativ auch als Federbügel, Klemme oder in sonstiger geeigneter Weise ausgebildet sein. Es kann sich um ein lösbares und entfernbares, wiederverwendbares oder verlorenes Teil handeln. Die Hebelfixierung (14) kann alternativ auch eine Sollbruchstelle aufweisen und bei kräftiger manueller Betätigung des Handbremshebels (2) zerstört werden. Die Hebelfixierung kann außerdem als ein am Handbremshebel (2) oder der Hebelkonsole (10) befestigtes Bauteil, z.B. eine Federklinke oder dergleichen ausgebildet sein.

In der in Figur 1 gezeigten Montagestellung sind der oder die Seilzüge (4) am Handbremshebel (2) bzw. dem Montagegestell (3) eingehängt. Die Seilzugverstellung (5) ist dabei mit einer geeigneten Überbrückungseinrichtung (29) entlastet oder überbrückt. Der Handbremshebel (2) kann dadurch in die extreme Hochstellung gebracht werden, ohne daß die Seilzugverstellung (5) mitgenommen oder betätigt und ohne daß der Seilzug (4) signifikant gespannt wird. In dieser Position sind die rückwärtigen Zugseilenden frei. Sie ragen aus dem umgebenen Mantel hervor und können an der Radbremse (6) bequem und sicher eingehängt werden (vgl. Figur 2).

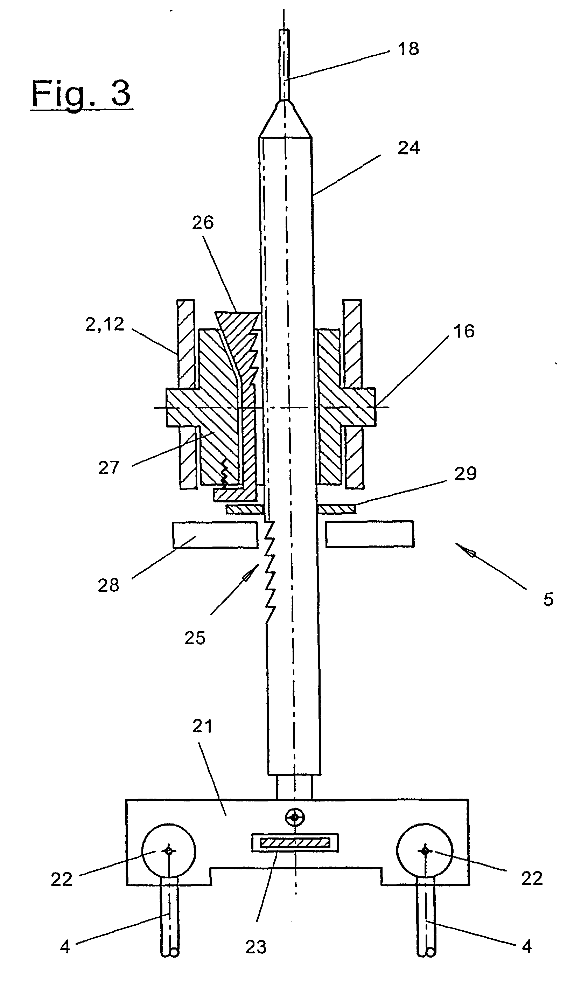

Für die Montage der Seilzüge (4) an der Radbremse (6) ist es günstig, wenn auch die Seilzugverstellung (5) bzw. die vorderen Zugseilenden (22) am Montagegestell (3) zumindest zeitweise arretierbar sind. Zu diesem Zweck ist eine lösbare Fixierung (23) vorhanden, die bei der in Figur 1 gezeigten Ausführungsform auf einen Waagebalken (21) einwirkt, der sich zwischen den Zugseilenden (22) und der Seilzugverstellung (5) befindet. Bei der Fixierung (23) kann es sich z.B. um einen Stecker handeln, der in eine geeignete Öffnung an einer horizontalen Arretierplatte der Hebelkonsole (10) bzw. des Montagegestells (3) und in eine fluchtend darunterliegende Öffnung im Waagebalken (21) greift (vgl. Fig. 1 und 3). Mit der Fixierung (23) werden zum einen die Zugseilenden (22) festgehalten und zum anderen auch die Seilzugverstellung (5), die sich beide beim Hochklappen des Handbremshebels (2) in die Montagestellung vorzugsweise nicht mitbewegen sollten.

In der in Figur 1 gezeigten Montagestellung wird die Montageeinheit (1a) mit dem Montagegestell (3) über eine geeignete Hilfsvorrichtung im Bereich der Bodengruppe (nicht dargestellt) des Fahrzeugs bereitgehalten oder an der Bodengruppe bzw. dem Chassis befestigt. Die Befestigung kann z.B. über chassisfeste Schraubbolzen oder in geeigneter anderer Weise erfolgen. Die Befestigung geschieht am offenliegenden Chassis und vor dem Zusammenfügen von Bodengruppe und Karosserie (36), dem sogenannten Decking. Am offenliegenden Chassis läßt sich die Montageeinheit (1a) leicht und schnell befestigen. Dabei können auch der oder die Seilzüge (4) an den Radbremsen (6) eingehängt werden. Dadurch ist die komplette Handbremseinrichtung (1) vor dem Decking am Chassis befestigbar. Anschließend wird beim Decking die Karosserie (36) mit der Öffnung (37) mit einer im wesentlichen vertikalen Senkbewegung (38) über die Montageeinheit (1a) gestülpt, wobei der aufrecht stehende Handbremshebel (2) durch die vorgesehene Karosserieöffnung (37) an der Mittelkonsole treten kann. Alternativ kann eine bereitgehaltene Montageeinheit (1a) auch an der Karosserie (36) nach dem Decking befestigt werden. Anschließend muß nur noch die Seilzugverstellung (5) entriegelt und betätigt werden, so daß der oder die Seilzüge (4) fertig eingestellt sind.

Die Seilzugverstellung (5) ist als Seilverstellung, z.B. entsprechend der WO 95/27642 ausgebildet. Bei der Seilverstellung wird das innenliegende Seil gegenüber dem außen abgestützten Mantel angezogen und dadurch der Seilzug (4) unter Aufhebung des Spieles gestrafft.

Im bevorzugten und gezeigten Ausführungsbeispiel kommt eine Seilverstellung zum Einsatz. Sie befindet sich zwischen dem Seilzug (4) und dem Handbremshebel (2). Der Mantel des Seilzugs (4) ist an einem Seilzugwiderlager (9) befestigt. Dies kann z.B. ein Seilanschluß (9) an der Seitenwand der wannenartigen Vertiefung (8) des Montagegestells (3) sein. Das innenliegende Seil ist mit dem z.B. mit einer Kugel versehenen Zugseilende (22) am Waagebalken (21) eingehängt. Figur 3 verdeutlicht diese Anordnung in der Draufsicht. Hier sind zwei Seilzüge (4) am Waagebalken (21) angehängt, der für einen Kraft- und Längenausgleich sorgt.

Die Seilzugverstellung (5) besitzt eine Zugstange (24), die mit einer vorzugsweise einzelnen Klemmbacke (26) und einem Klemmgehäuse (27) zusammenwirkt. Am rückwärtigen Ende ist die Zugstange (24) gelenkig am Waagebalken (21) angehängt. Am Vorderende ist ein Spannseil (18) befestigt, das in der nachfolgend beschriebenen Weise mit dem Handbremshebel (2) verbunden wird.

Die Zugstange (24) und die Klemmbacke (26) haben ein Rastgesperre (25), das in der gezeigten Ausführungsform als eine Sägeverzahnung ausgebildet ist. Die Zähne befinden sich nur auf der einen Außenseite der Zugstange (24) und auf der gegenüberliegenden Innenseite der Klemmbacke (26). Die Klemmbacke (26) ist am Klemmgehäuse (27) gehalten und schwimmend gelagert, wobei sie längs- und querbeweglich im Klemmgehäuse (27) geführt ist. Durch die Gehäuseöffnung ragt auch die Zugstange (24) und ist darin ebenfalls längsverschieblich geführt.

Das Klemmgehäuse (27) ist drehbar über eine Gehäuselagerung (16) am Handbremshebel (2) angeordnet. Wie die Seitenansichten von Figur 1 und 2 verdeutlichen, befindet sich die Gehäuselagerung in Ruhestellung in etwa unterhalb der Achse (15) und bildet einen vorspringenden Ansatz. In Ruhestellung taucht sie in die Vertiefung (8) des Montagegestells (3) ein.

Die Klemmbacke (26) hat an der Außenseite eine ausgestellte Keilfläche, die mit einer in gleicher Richtung geneigten Keilfläche am Klemmgehäuse (27) zusammenwirkt. Die Klemmbacke (26) und das Klemmgehäuse (27) sind außerdem durch einen seitlich vorspringenden Backenansatz und eine dort mit seitlichem Abstand einwirkende Feder miteinander verbunden. Die Feder drückt die Klemmbacke (26) über die Keilfläche gegen die Zugstange (24) und bringt dadurch das Rastgesperre (25) in Eingriff.

Am Boden der wannenförmigen Vertiefung (8) ist ein Anschlag (28) (vgl. Fig. 2) vorhanden, gegen den die Klemmbacke (26) in Ruhestellung des Handbremshebels (2) rückseitig anläuft. Die Kontaktstelle am Anschlag (28) liegt seitlich zwischen der Zugstange (24) und der Feder. Der Anschlag (28) drückt die Klemmbacke (26) gegen die Kraft der kleinen Feder zum Klemmgehäuse (27) hin, wodurch die Klemmbacke (26) über die Keilführung nach außen wandert bzw. durch die exzentrisch gegenüber der Kontaktstelle angreifende Feder nach außen gekippt wird. Die Klemmbacke (26) hebt dabei von der Zugstange (24) seitlich ab und löst das Rastgesperre (25). Zur zentrierenden Führung der Zugstange (24) kann der Anschlag (28) beidseitig vorhanden sein.

Das vorerwähnte Spannseil (18) ist mit einer Feder (7) verbunden, die in Ruhestellung des Handbremshebels und gelöstem Rastgesperre (25) das Spiel aus dem Seilzug (4) nimmt und das innenliegende Seil gegenüber dem Mantel strafft. Dabei kann die Zugstange (24) an der Klemmbacke (26) vorbeigezogen werden.

Das Rastgesperre (25) ist in der vorerwähnten Weise vorzugsweise als Sägeverzahnung ausgebildet, bei der die steilen Flanken zur Radbremse (6) und die flacheren Flanken zum Spannseil (18) bzw. zur Feder (7) weisen. Diese Zahnform erleichtert das Durchziehen der Zugstange zum Straffen des Seilzugs (4), wobei die Zähne des Rastgesperres (25) aneinander vorbei ratschen. Alternativ kann die Verzahnung auch beliebig anders ausgebildet sein. Anstelle einer Verzahnung ist auch eine wellenartige Profilierung möglich. Grundsätzlich ist jede geeignete kraft- oder formschlüssige Kopplung von Zugstange (24) und Klemmbacke (26) als Rastgesperre (25) nutzbar.

In den verschiedenen Betriebsstellungen bei teilweiser oder ganz angezogenem Handbremshebel (2) wird die Seilzugverstellung (5) vom Anschlag (28) entfernt, wodurch die besagte Feder die Klemmbacke (26) vom Klemmgehäuse (27) weg schiebt und dadurch das Rastgesperre (25) in Eingriff bringt. Die am Handbremshebel (2) einwirkende Handkraft wird dann über das Klemmgehäuse (27) auf die Zugstange (24) und auf den oder die Seilzüge (4) übertragen. Das Spannseil (18) und die Feder (7) sind dabei außer Funktion bezüglich des oder der Seilzüge (4).

Die gezeigte Schnellverstellung (5) nimmt automatisch das Spiel aus dem oder den Seilzügen (4) und stellt sich selbsttätig nach. Sie bietet außerdem einen besonders großen Verstellweg, wie Figur 1 und 2 zeigen. Dies ist besonders für die Aufrechtposition des Handbremshebels (2) in der Montagestellung vorteilhaft. In dieser Position können die Zugstangen (24) und das Klemmgehäuse (27) sowie die Klemmbacke (26) außer Eingriff sein. Das Spannseil (28) ist durch Klemmbacke (26) und Klemmgehäuse (27) hindurchgeführt. Für ein leichtes Einfädeln der Zugstange (24) in das Klemmgehäuse (27) beim Abklappen des Handbremshebels (2) kann die Zugstange (24) am Vorderende eine Anschrägung aufweisen.

Die Überbrückungseinrichtung (29) besteht in der gezeigten Ausführungsform z.B. aus einer Scheibe, die längsbeweglich und kippbar auf der Zugstange (24) geführt ist. Mit der Scheibe kann die Klemmbacke (26) zum Lösen des Rastgesperres (25) an das Klemmgehäuse (27) gepreßt werden, so daß beide gegenüber der Zugstange (24) vorwärts bewegt werden können. In der Montagestellung verkeilt sich die Scheibe (29) durch Schrägstellung auf der Zugstange (24) und stützt sich mit einer Seite am Handbremshebel (2) ab. In Figur 1 ist die Anordnung der Übersicht teilweise gelöst voneinander dargestellt. Nach erfolgter Montage rutscht die Überbrückungseinrichtung (29) zurück und ist im normalen Betrieb der Handbremseinheit außer Funktion.

Das Spannseil (18) ist aus dem Klemmgehäuse (27) kommend über einen vorspringenden Führungsansatz (17) am Handbremshebel (2) geführt. Es wird dann seitlich am Hebelgehäuse entlanggeführt und in einer Umlenkung (30) zur Achse (15) bzw. der dortigen Feder (7) hin gelenkt. Das Spannseil (18) kann als Bowdenzug ausgebildet sein.

Wie Figur 1 und 2 verdeutlichen, ist die Feder (7) als Drehfeder ausgebildet und gleichachsig mit dem Handbremshebel (2) auf der gestellfesten Achse (15) gelagert. Das eine Federende (19) ist über einen Seilhaken mit dem Spannseil (18) verbunden und das andere Federende (20) ist als Spannbügel ausgebildet. Es hintergreift oder übergreift den Handbremshebel (2). Die gegeneinander über die Federwindungen verspannten Federenden (19,20), nehmen über den Drehweg des Handbremshebels (2) unterschiedliche Stellungen ein. Die Feder (7) überträgt die Zugkräfte des Spannseils (18) auf den Handbremshebel (2), der sich wiederum über den Zahnbogen (11) oder ein anderes Teil an der Hebelkonsole (10) abstützt. Über die gegeneinander verspannten Federenden (19,20) wird der Handbremshebel (2) stets nach unten gegen die Drehrichtung (13) gezogen.

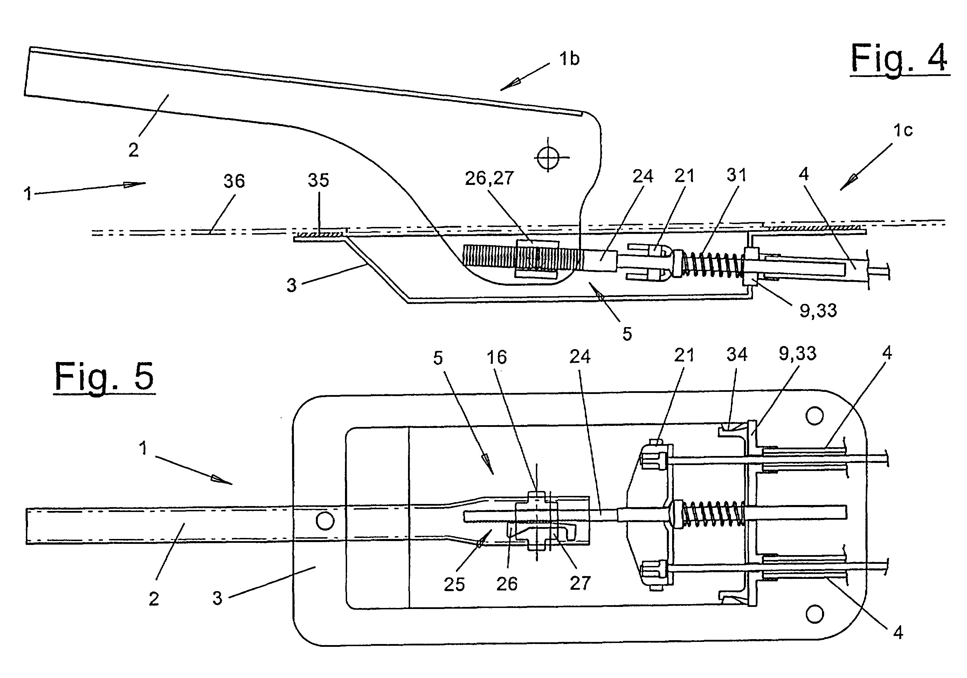

Figur 4 bis 7 zeigen zwei Varianten der Handbremseinrichtung von Figur 1 bis 3. Die Bauform von Figur 4 und 5 besteht aus zwei Montageteileinheiten (1b,1c), die nach dem Decking zusammengefügt werden. Figur 6 zeigt eine Zwischenbauform, die sowohl aus einer einzigen Montageeinheit (1a) entsprechend Figur 1 und 2 oder zwei Montageteileinheiten (1b,1c) entsprechend Figur 4 und 5 bestehen kann.

In Figur 4 und 5 bildet der Handbremshebel (2) mit dem Klemmelement (26) und dem Klemmgehäuse (27) die erste Montageteileinheit (1b). Die zweite Montageteileinheit (1c) besteht aus dem Zugelement (24), der Feder (31) und dem Waagebalken (21) mit dem Seilzugwiderlager (9) und den angehängten Seilzügen (4). Gegebenenfalls ist auch ein Montagegestell (3) vorhanden. Die Seilzugverstellung (5) beinhaltet auch hier die Montageschnittstelle, an der die beiden Montageteileinheiten (1b,1c) zusammengefügt werden.

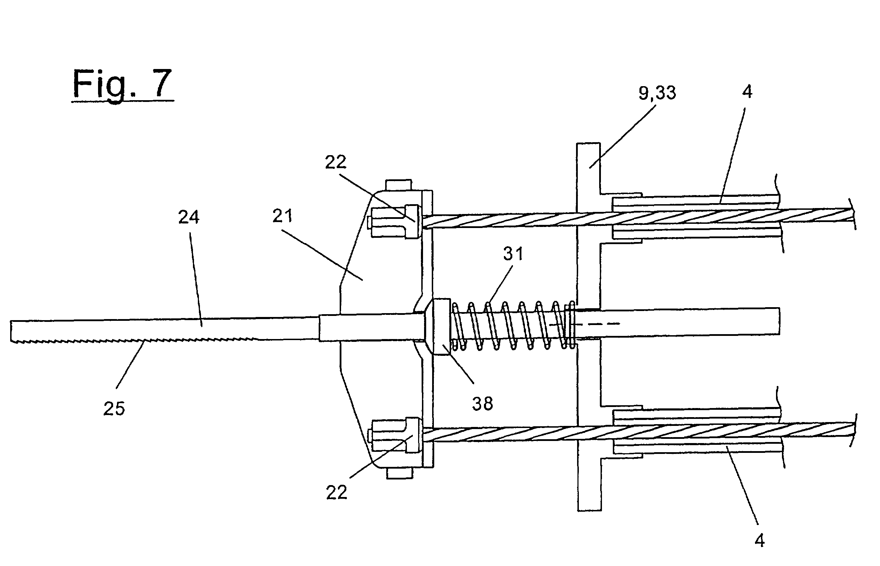

Wie Figur 7 im Detail verdeutlicht, wird die Zugstange (24) anstelle der Drehfeder von Figur 1 und 2 von einer Druckfeder (31) beaufschlagt. Die Druckfeder (31) ist auf dem hinteren Ende der Zugstange (24) aufgezogen und stützt sich einerseits am Seilzugwiderlager (9) und andererseits an einem Bund (39) der Zugstange (24) ab. Auf der Zugstange (24) ist wiederum der Waagebalken (21) geführt, der sich nach hinten an dem Bund (39) und dessen abgerundeter Oberfläche abstützt.

Die Zugstange (24) ragt mit ihrem hinteren Ende durch eine Öffnung im Seilzugwiderlager (9) und ist dort ihrerseits längsbeweglich geführt. Das Seilzugwiderlager (9) kann von einer festen Wand des Montagegestells (3) gebildet werden. In der in Figur 4 und 5 gezeigten bevorzugten Ausführungsform ist das Seilzugwiderlager (9) als bewegliche Stützplatte (33) ausgebildet, die an den Seitenwänden des Montagegestells (3) oder einer Hilfsvorrichtung (nicht dargestellt) über eine Clipsverbindung (34) befestigt ist. Die Stützplatte (33) kann dadurch bei der Montage an das Montagegestell (3) angesteckt werden.

Das Seilzugwiderlager (9) hat eine gewisse Drehbeweglichkeit um die Horizontalachse, so daß sich die Zugstange (24) bei der Hebelbewegung mitbewegen kann und auf und ab schwenken bzw. schrägstellen kann. Vorzugsweise ist diese Drehbeweglichkeit durch eine kalottenförmige Clipsverbindung (34) gegeben, die zugleich das Drehlager darstellt. Alternativ kann das Seilzugwiderlager (9) aber auch an einer ganz anderen Stelle im Bereich der Bodengruppe (35) angeordnet sein.

Zur Montage der Handbremseinrichtung (1) von Figur 4 und 5 wird zunächst die eine Montageteileinheit (1c) im Bereich der Bodengruppe (35) angeordnet. Sie kann dazu an der Bodengruppe (35) oder einer geeigneten Hilfsvorrichtung montiert sein. Die Seilzüge (4) sind an den Radbremsen eingehängt und mit der Zugstange (24) verbunden. Durch die Feder (31) wird die Zugstange (24) in einer montagegünstigen Lage gehalten, die vorzugsweise horizontal oder schräg ist. Zur Erleichterung der Montage und zum Schutz der Komponenten empfiehlt es sich, die Zugstange (24) liegend in der Wanne des Montagegestells (3) anzuordnen. Die Anordnung bzw. der Montageteileinheit (1c) folgt vorzugsweise vor dem Decking.

Die andere Montageteileinheit (1b) mit dem Handbremshebel (2) wird erst nach dem Decking montiert. Der Handbremshebel (2) wird von oben mit seiner Hebelkonsole (nicht dargestellt) auf der Karosserie (36) oder gegebenenfalls auch auf dem Montagegestell (3) befestigt. Dabei wird die bereitliegende Zugstange (24) in das Klemmgehäuse (27) eingeführt und mit dem dort gehaltenen Klemmelement (26) über das Rastgesperre (25) in Eingriff gebracht. Die Montageteileinheit (1c) kann nach dem Decking auch mit der Karosserie (36) durch Schrauben oder dergleichen verbunden werden.

Bei der Bauform von Figur 4 und 5 ist die Zugstange (24) am vorderen Ende gerade abgeschnitten, wobei die Verzahnung (25) auch bis zum vorderen Ende reicht. Figur 6 zeigt hierzu eine Variante. Die Zugstange (24) hat hier am vorderen Ende eine Führungsnase (32), die das Einfädeln in das Klemmgehäuse (27) erleichtert. Die Führungsnase (32) ist dazu vorzugsweise schräg nach oben abgewinkelt und hat außerdem verzahnungsfreie glatte und gegebenenfalls verjüngte Wände. Sie kann dadurch ungehindert in das Klemmgehäuse (27) eintauchen.

Die Handbremseinheit (1) von Figur 6 kann zum einen aus zwei Montageteileinheiten (1b,1c) bestehen, die in ähnlicher Weise wie in Figur 4 und 5 ausgebildet sind und montiert werden. Durch die Führungsnase (32) ist es aber auch möglich, die Handbremseinrichtung (1) von Figur 6 als eine komplette Montageeinheit (1a) entsprechend Figur 1 und 2 auszubilden und zu montieren. Die Führungsnase (32) erlaubt es, den Handbremshebel (2) zum Decking in eine aufrechte Lage zu bringen, so daß die Karosserie (36) mit der Öffnung (37) über die Handbremseinrichtung (1) in Deckingrichtung (38) abgesenkt werden kann. Durch die abgewinkelte Führungsnase (32) sind die Zugstange (24) und die Klemmbacke (26) mit dem Klemmgehäuse (27) auch bei hochstehendem Handbremshebel (2) in Verbindung, wobei allerdings das Rastgesperre (25) gelöst ist. Beim Abschwenken des Handbremshebels (2) nach dem Decking wird das Rastgesperre (25) automatisch wieder geschlossen und in Eingriff gebracht. Die Seilzugverstellung (5) ist dadurch ähnlich wie in Figur 1 und 2 während der Montage überbrückt bzw. entlastet. In Figur 4 und 5 ist die Seilzugverstellung während der Montage getrennt.

Abwandlungen der gezeigten Ausführungsbeispiele sind in verschiedener Weise möglich. So kann z. B. am Vorderende der Zugstange (24) auch eine mit dem Montagegestell (3) verbundene Zugfeder direkt eingehängt werden. Ferner kann die Seilzugverstellung (5) in anderer Weise ausgebildet sein. Sie kann auch auf andere Weise montiert werden.

### BEZUGSZEICHENLISTE

- 1: Handbremseinrichtung
- 1a: Montageeinheit
- 1b: Montageeinheit, Montageteileinheit
- 1c: Montageeinheit, Montageteileinheit
- 2: Handbremshebel
- 3: Montagegestell
- 4: Seilzug
- 5: Seilzugverstellung
- 6: Radbremse
- 7: Feder, Drehfeder
- 8: Vertiefung
- 9: Seilzugwiderlager, Seilanschluß
- 10: Hebelkonsole
- 11: Zahnbogen
- 12: Griff
- 13: Drehrichtung
- 14: Hebelfixierung
- 15: Achse
- 16: Gehäuselagerung
- 17: Führungsansatz
- 18: Spannseil
- 19: Federende, Seilhaken
- 20: Federende, Spannbügel
- 21: Waagebalken
- 22: Zugseilende
- 23: Fixierung, Stecker
- 24: Zugelement, Zugstange
- 25: Rastgesperre, Verzahnung
- 26: Klemmelement, Klemmbacke
- 27: Klemmgehäuse
- 28: Anschlag
- 29: Überbrückungseinrichtung, Arretierung
- 30: Umlenkung
- 31: Feder, Druckfeder
- 32: Führungsnase
- 33: Stützplatte
- 34: Clipsverbindung
- 35: Bodengruppe, Hilfsvorrichtung
- 36: Karosserie
- 37: Öffnung
- 38: Deckingrichtung
- 39: Bund

## Patentansprüche

1. Handbremseinrichtung für Fahrzeuge mit einem Handbremshebel, mindestens einem Seilzug und einer automatischen Seilzugverstellung zwischen Handbremshebel und Seilzug, die im Betrieb das Spiel im Seilzug beseitigt, dadurch
**gekennzeichnet,** daß die Handbremseinrichtung (1) für die Fahrzeugmontage aus ein oder mehreren vorbereiteten Montageeinheiten (1a,1b,1c) besteht und eine für den Montagevorgang trennbare, überbrückbare oder entlastbare Seilzugverstellung (5) aufweist.

2. Handbremseinrichtung nach Anspruch 1, dadurch **gekennzeichnet,** daß der Handbremshebel (2) mit dem eingehängten Seilzug (4) und der überbrückbaren oder entlastbaren Seilzugverstellung (5) eine gemeinsame Montageeinheit (1a) bildet und zur Montage im wesentlichen aufrecht ausgerichtet ist.

3. Handbremseinrichtung nach Anspruch 1, dadurch **gekennzeichnet,** daß der Handbremshebel (2) mit dem einen Teil (26,27) der trennbaren Seilzugverstellung (5) eine erste Montageteileinheit (1b) bildet und der Seilzug (4) mit dem anderen Teil (24) der Seilzugverstellung (5) eine zweite Montageteileinheit (1c) bildet, die getrennt montierbar und über die Teile (24,26,27) der Seilzugverstellung (5) nachträglich miteinander verbindbar sind.

4. Handbremseinrichtung nach Anspruch 1, 2 oder 3, dadurch **gekennzeichnet,** daß die Seilzugverstellung (5) ein federbelastetes Zugelement (24) und mindestens ein Klemmelement (26) mit einem gegenseitigen Rastgesperre (25) aufweist, die in einem Klemmgehäuse (27) längsverschieblich gelagert und in Eingriff bringbar sind, wobei das Klemmgehäuse (27) am Handbremshebel (2) drehbar gelagert ist.

5. Handbremseinrichtung nach Anspruch 4, dadurch **gekennzeichnet,** daß zur Montage das Rastgesperre (25) geöffnet und das Zugelement (24) vom Klemmelement (26) und dem Klemmgehäuse (27) gelöst ist.

6. Handbremseinrichtung nach Anspruch 4 oder 5, dadurch **gekennzeichnet**, daß das Zugelement (24) ein Spannseil (18) oder eine Führungsnase (32) aufweist, die mit dem Klemmelement (26) und dem Klemmgehäuse (27) in rastfreier Verbindung steht.

7. Handbremseinrichtung nach Anspruch 1 oder einem der folgenden, dadurch **gekennzeichnet,** daß der Handbremshebel (2) mit einer lösbaren Hebelfixierung (14) in aufrechter Stellung gehalten ist.

8. Handbremseinrichtung nach Anspruch 6 oder 7, dadurch **gekennzeichnet,** daß die Seilzugverstellung (5) eine Drehfeder (7) aufweist, die relativ ortsfest gelagert und über das Spannseil (18) mit dem vorderen Ende des Zugelements (24) verbunden ist.

9. Handbremseinrichtung nach Anspruch 8, dadurch **gekennzeichnet**, daß die Drehfeder (7) auf der Achse (15) des Handbremshebels (2) gelagert ist, wobei das eine Federende (19) mit dem Spannseil (18) und das andere Federende (20) mit dem Handbremshebel (2) verbunden ist.

10. Handbremseinrichtung nach Anspruch 6 oder einem der folgenden, dadurch **gekennzeichnet,** daß das Spannseil (18) am Handbremshebel (2) über einen vorstehenden Führungsansatz (17) und eine Umlenkung (30) geführt ist.

11. Handbremseinrichtung nach Anspruch 6 oder einem der folgenden, dadurch **gekennzeichnet,** daß auf dem Zugelement (24) eine verstell- und temporär fixierbare Überbrückungseinrichtung (29) zum Offenhalten des Rastgesperres (25) angeordnet ist.

12. Handbremseinrichtung nach Anspruch 6, dadurch **gekennzeichnet**, daß die Führungsnase (32) schräg abgewinkelt ist und keine Verzahnung (25) aufweist.

13. Handbremseinrichtung nach Anspruch 6 oder einem der folgenden, dadurch **gekennzeichnet,** daß die Seilzugverstellung (5) eine Druckfeder (32) aufweist, die relativ ortsfest abgestützt und an dem Zugelement (24) geführt ist.

14. Handbremseinrichtung nach Anspruch 1 oder einem der folgenden, dadurch **gekennzeichnet**, daß das Seilzugwiderlager (9) von einer Stützplatte (33) gebildet ist, die lösbar mit einem Montagegestell (3) verbindbar ist und an der sich die Druckfeder (32) sich abstützt.

15. Handbremseinrichtung nach Anspruch 1 oder einem der folgenden, dadurch **gekennzeichnet,** daß die Seilzugverstellung (5) eine lösbare Fixierung (23) für das Zugelement (24) aufweist.

16. Handbremseinrichtung nach Anspruch 15, dadurch **gekennzeichnet**, daß die lösbare Fixierung (23) mit dem Zugelement und/oder einem Waagebalken (21) verbunden ist.

17. Verfahren zur Montage einer Handbremseinrichtung für Fahrzeuge, die einen Handbremshebel, mindestens einen Seilzug und eine automatischen Seilzugverstellung zwischen Handbremshebel und Seilzug aufweist, die im Betrieb das Spiel im Seilzug beseitigt, wobei die Fahrzeugteile im Decking zusammengefügt werden, dadurch **gekennzeichnet,** daß die aus ein oder mehreren vorbereiteten Montageeinheiten (1a,1b,1c) bestehende Handbremseinrichtung (1) mit einer getrennten, überbrückten oder entlasteten Seilzugverstellung (5) zumindest in Teilen vor dem Decking an der Bodengruppe (35) oder einer bodenseitigen Hilfsvorrichtung montiert wird, wobei nach dem Decking die Seilzugverstellung (5) in Funktion gebracht wird.

18. Verfahren nach Anspruch 17, dadurch **gekennzeichnet,** daß der Handbremshebel (2) mit dem eingehängten Seilzug (4) und der überbrückbaren oder entlastbaren Seilzugverstellung (5) vor dem Decking in einer gemeinsamen Montageeinheit (1a) an der Bodengruppe (35) oder einer bodenseitigen Hilfsvorrichtung montiert wird, wobei der Handbremshebel (2) in eine im wesentlichen in Deckingrichtung (38) weisende und durch eine Karosserieöffnung (37) passende Stellung gebracht und nach zur Montage unter Einrastung der Seilzugverstellung (5) umgelegt wird.

19. Verfahren nach Anspruch 17, dadurch **gekennzeichnet,** daß der Seilzug (4) mit einem Teil (24) der trennbaren Seilzugverstellung (5) und der Handbremshebel (2) mit einem anderen Teil (26,27) der Seilzugverstellung (5) vor und nach dem Decking getrennt montiert werden, wobei nach dem Decking die Teile (24,26,27) der Seilzugverstellung (5) nachträglich miteinander verbunden werden.

20. Verfahren nach Anspruch 19, dadurch **gekennzeichnet,** daß der Seilzug (4) mit dem Zugelement (24) der Seilzugverstellung (5) und dem Seilzugwiderlager (9) vor dem Decking im Bereich der Bodengruppe (35) montiert oder bereitgehalten wird und der Handbremshebel (2) nach dem Decking an der Karosserie (36) oder einem Montagegestell (3) montiert wird.

## Claims

1. Hand-brake device for vehicles with a hand-brake lever, at least one control cable and an automatic control cable adjuster between the hand-brake lever and the control cable, the said adjuster eliminating the play in the control cable during operation, characterized in that, for installation in the vehicle, the hand-brake device (1) comprises one or more prepared installation units (1a, 1b, 1c) and has a control cable adjuster (5) which can be divided, bridged or relieved of load for the installation process.

2. Hand-brake device according to Claim 1, characterized in that the hand-brake lever (2) forms a common installation unit (1a) with the attached control cable (4) and the control cable adjuster (5) which can be bridged or relieved of load and, for installation, is aligned essentially upright.

3. Hand-brake device according to Claim 1, characterized in that the hand-brake lever (2) forms a first installation subunit (1b) with one part (26, 27) of the dividable control cable adjuster (5), and the control cable (4) forms a second installation subunit (1c) with the other part (24) of the control cable adjuster (5), which second subunit can be installed separately and can be used to connect parts (24, 26, 27) of the control cable adjuster (5) to one another subsequently.

4. Hand-brake device according to Claim 1, 2 or 3, characterized in that the control cable adjuster (5) has a spring-loaded tension element (24) and at least one clamping element (26) with a mutual ratchet mechanism (25) which are mounted in longitudinally displaceable fashion in a clamping housing (27) and can be brought into engagement, the clamping housing (27) being rotatably mounted on the hand-brake lever (2).

5. Hand-brake device according to Claim 4, characterized in that for installation the ratchet mechanism (25) is opened and the tension element (24) is released from the clamping element (26) and the clamping housing (27).

6. Hand-brake device according to Claim 4 or 5, characterized in that the tension element (24) has a tensioning cable (18) or a guide nose (32) which is in non-latching connection with the clamping element (26) and the clamping housing (27).

7. Hand-brake device according to Claim 1 or one of the subsequent claims, characterized in that the hand-brake lever (2) is held in an upright position by means of a releasable lever fixing (14).

8. Hand-brake device according to Claim 6 or 7, characterized in that the control cable adjuster (5) has a torsion spring (7) which is arranged in a relatively fixed position and is connected to the forward end of the tension element (24) by the tensioning cable (18).

9. Hand-brake device according to Claim 8, characterized in that the torsion spring (7) is mounted on the pivot (15) of the hand-brake lever (2), one spring end (19) being connected to the tensioning cable (18) and the other spring end (20) being connected to the hand-brake lever (2).

10. Hand-brake device according to Claim 6 or one of the subsequent claims, characterized in that the tensioning cable (18) is guided on the hand-brake lever (2) by means of a projecting guide lug (17) and a deflection (30).

11. Hand-brake device according to Claim 6 or one of the subsequent claims, characterized in that an adjustable and temporarily fixable bridging device (29) is arranged on the tension element (24) to hold the ratchet mechanism (25) open.

12. Hand-brake device according to Claim 6, characterized in that the guide nose (32) is angled obliquely and has no toothing (25).

13. Hand-brake device according to Claim 6 or one of the subsequent claims, characterized in that the control cable adjuster (5) has a compression spring (32) which is supported in a relatively fixed position and is guided on the tension element (24).

14. Hand-brake device according to Claim 1 or one of the subsequent claims, characterized in that the control cable abutment (9) is formed by a supporting plate (33) which can be connected releasably to- an installation frame (3) and against which the compression spring (32) is supported.

15. Hand-brake device according to Claim 1 or one of the subsequent claims, characterized in that the control cable adjuster (5) has a releasable fixing (23) for the tension element (24).

16. Hand-brake device according to Claim 15, characterized in that the releasable fixing (23) is connected to the tension element and/or a balance beam (21).

17. Method for installing a hand-brake device for vehicles, which has a hand-brake lever, at least one control cable and an automatic control cable adjuster between the hand-brake lever and the control cable, which eliminates the play in the control cable during operation, the vehicle parts being joined together by decking, characterized in that the hand-brake device (1), which comprises one or more prepared installation units (1a, 1b 1c), is installed at least in parts, with a divided, bridged or load-relieved control cable adjuster (5), on the floor assembly (35) or an auxiliary device on the floor, before decking, the control cable adjuster (5) being put into operation after decking.

18. Method according to Claim 17, characterized in that the hand-brake lever (2), together with the attached control cable (4) and the control cable adjuster (5) which can be bridged or relieved of load, is installed in a common installation unit (1a) on the floor assembly (35) or an auxiliary device on the floor, before decking, the hand-brake lever (2) being moved into a position in which it points essentially in the decking direction (38) and fits through a bodywork opening (37) and then turned over for installation, during which process the control cable adjuster (5) is latched in.

19. Method according to Claim 17, characterized in that the control cable (4) is installed before decking with part (24) of the dividable control cable adjuster (5) and the hand-brake lever (2) is installed separately, after decking, with another part (26, 27) of the control cable adjuster (5), the parts (24, 26, 27) of the control cable adjuster (5) being connected to one another subsequently after decking.

20. Method according to Claim 19, characterized in that the control cable (4) is installed, or held ready, in the region of the floor assembly (35) with the tension element (24) of the control cable adjuster (5) and the control cable abutment (9), before decking, and the hand-brake lever (2) is installed on the bodywork (36) or an installation frame (3) after decking.

## Revendications

1. Système de frein à main pour des véhicules, comportant un levier de frein à main, au moins une tirette à câble et un dispositif automatique de réglage de tirette entre le levier de frein à main et la tirette à câble, qui élimine en service le jeu de la tirette à câble, caractérisé en ce que le système (1) de frein à main est constitué, pour le montage dans le véhicule, d'une ou plusieurs unités (1a, 1b, 1c) de montage préparées, et comporte un dispositif (5) de réglage de tirette qui, pour l'opération de montage, peut être divisé, outrepassé ou relâché.

2. Système de frein à main suivant la revendication 1, caractérisé en ce que le levier (2) de frein à main forme une unité (1a) de montage commune avec la tirette (4) à câble accrochée et le dispositif (5) de réglage de tirette pouvant être outrepassé ou relâché, et est orienté essentiellement à la verticale pour le montage.

3. Système de frein à main suivant la revendication 1, caractérisé en ce que le levier (2) de frein à main forme une première unité (1b) partielle de montage avec une partie (26, 27) du dispositif (5) de réglage de tirette pouvant être divisé, et la tirette (4) à câble forme une deuxième unité (1c) partielle de montage avec l'autre partie (24) du dispositif (5) de réglage de tirette, les unités partielles pouvant être montées séparément, et être ultérieurement réunies par l'intermédiaire des parties (24, 26, 27) du dispositif (5) de réglage de tirette.

4. Système de frein à main suivant la revendication 1, 2 ou 3, caractérisé en ce que le dispositif (5) de réglage de tirette comporte un élément (24) de traction soumis à l'action d'un ressort et au moins un élément (26) de serrage, pourvus d'un moyen (25) d'encliquetage réciproque, qui sont montés à déplacement longitudinal dans un boîtier (27) de serrage et peuvent y être amenés en engagement, le boîtier (27) de serrage étant monté à rotation sur le levier (2) de frein à main.

5. Système de frein à main suivant la revendication 4, caractérisé en ce que, pour le montage, le moyen (25) d'encliquetage est ouvert et l'élément (24) de traction est libéré de l'élément (26) de serrage et du boîtier (27) de serrage.

6. Système de frein à main suivant la revendication 4 ou 5, caractérisé en ce que l'élément (24) de traction comporte un câble (18) tendeur ou un bec (32) de guidage, qui est relié sans encliquetage à l'élément (26) de serrage et au boîtier (27) de serrage.

7. Système de frein à main suivant la revendication 1 ou une des suivantes, caractérisé en ce que le levier (2) de frein à main est maintenu en position verticale par un moyen (14) libérable de blocage de levier.

8. Système de frein à main suivant la revendication 6 ou 7, caractérisé en ce que le dispositif (5) de réglage de tirette comporte un ressort (7) de torsion, qui est monté en immobilité relative et est relié par l'intermédiaire du câble (18) tendeur à l'extrémité avant de l'élément (24) de traction.

9. Système de frein à main suivant la revendication 8, caractérisé en ce que le ressort (7) de torsion est monté sur l'axe (15) du levier (2) de frein à main, une extrémité (19) du ressort étant reliée au câble (18) tendeur et l'autre extrémité (20) du ressort étant reliée au levier (2) de frein à main.

10. Système de frein à main suivant la revendication 6 ou une des suivantes, caractérisé en ce que le câble (18) tendeur est guidé sur le levier (2) de frein à main au moyen d'un appendice (17) saillant de guidage et d'un renvoi (30).

11. Système de frein à main suivant la revendication 6 ou une des suivantes, caractérisé en ce qu'un moyen (29) d'outrepassement, pouvant être déplacé et temporairement bloqué, est disposé sur l'élément (24) de traction pour maintenir ouvert le moyen (25) d'encliquetage.

12. Système de frein à main suivant la revendication 6, caractérisé en ce que le bec (32) de guidage est coudé en oblique et ne comporte pas de denture (25).

13. Système de frein à main suivant la revendication 6 ou une des suivantes, caractérisé en ce que le dispositif (5) de réglage de tirette comporte un ressort (31) de pression, qui est soutenu en immobilité relative et est guidé sur l'élément (24) de traction.

14. Système de frein à main suivant la revendication 1 ou une des suivantes, caractérisé en ce que le contre-appui (9) de tirette à câble est formé par une plaque (33) d'appui, qui peut être assemblée de façon démontable à un bâti (3) de montage et contre laquelle s'appuie le ressort (31) de pression.

15. Système de frein à main suivant la revendication 1 ou une des suivantes, caractérisé en ce que le dispositif (5) de réglage de tirette comporte un moyen (23) de blocage libérable pour l'élément (24) de traction.

16. Système de frein à main suivant la revendication 15, caractérisé en ce que le moyen (23) de blocage libérable est relié à l'élément de traction et/ou à un fléau (21).

17. Procédé de montage d'un système de frein à main pour des véhicules, le système comportant un levier de frein à main, au moins une tirette à câble et un dispositif automatique de réglage de tirette entre le levier de frein à main et la tirette à câble, qui élimine en service le jeu de la tirette à câble, caractérisé en ce que, avant le recouvrement (" decking "), le système (1) de frein à main, constitué d'une ou plusieurs unités (1a, 1b, 1c) de montage préparées, est monté avec un dispositif (5) de réglage de tirette pouvant être divisé, outrepassé ou relâché, au moins en parties, sur le bas (35) de caisse ou un accessoire côté bas de caisse, le dispositif (5) de réglage de tirette étant mis en service après le recouvrement.

18. Procédé suivant la revendication 17, caractérisé en ce que, avant le recouvrement, le levier (2) de frein à main est monté avec la tirette (4) à câble accrochée et le dispositif (5) de réglage de tirette pouvant être outrepassé ou relâché, en une unité (1a) de montage commune sur le bas (35) de caisse ou un accessoire côté bas de caisse, le levier (2) de frein à main étant amené dans une position orientée essentiellement dans la direction (38) de recouvrement et appropriée pour passer dans une ouverture (37) de la carrosserie, puis étant renversé à la suite du montage, avec encliquetage du dispositif (5) de réglage de tirette.

19. Procédé suivant la revendication 17, caractérisé en ce que, avant et après le recouvrement, la tirette (4) à câble est montée séparément avec une partie (24) du dispositif (5) de réglage de tirette pouvant être divisé et le levier (2) de frein à main est monté séparément avec une autre partie (26, 27) du dispositif (5) de réglage de tirette, les parties (24, 26, 27) du dispositif (5) de réglage de tirette étant ultérieurement réunies, après le recouvrement.

20. Procédé suivant la revendication 19, caractérisé en ce que, avant le recouvrement, la tirette (4) à câble est montée ou maintenue à disposition dans la région du bas (35) de caisse avec l'élément (24) de traction du dispositif (5) de réglage de tirette et le contre-appui (9) de tirette à câble, et, après le recouvrement, le levier (2) de frein à main est monté sur la carrosserie (36) ou sur un bâti (3) de montage.
